**Europäisches Patentamt**

**European Patent Office**

**Office européen des brevets**

(19)

(11) Veröffentlichungsnummer : **0 334 910 B1**

(12) # EUROPÄISCHE PATENTSCHRIFT

(45) Veröffentlichungstag der Patentschrift :
**17.06.92 Patentblatt 92/25**

(51) Int. Cl.⁵ : **F01N 3/02, B01D 46/24, B01D 39/08**

(21) Anmeldenummer : **88907629.5**

(22) Anmeldetag : **21.09.88**

(86) Internationale Anmeldenummer :
**PCT/DE88/00586**

(87) Internationale Veröffentlichungsnummer :
**WO 89/02976 06.04.89 Gazette 89/08**

(54) **RUSSFILTER.**

(30) Priorität : **22.09.87 DE 3731766**

(43) Veröffentlichungstag der Anmeldung :
**04.10.89 Patentblatt 89/40**

(45) Bekanntmachung des Hinweises auf die
Patenterteilung :
**17.06.92 Patentblatt 92/25**

(84) Benannte Vertragsstaaten :
**AT BE CH DE FR GB IT LI LU NL SE**

(56) Entgegenhaltungen :
**EP-A- 0 230 579**

(56) Entgegenhaltungen :
**FR-A- 1 268 493**
**US-A- 2 994 435**
**US-A- 3 869 267**
**US-A- 4 478 618**

(73) Patentinhaber : **BUCK, Alfred**
**Nagolder Strasse 32**
**W-7407 Rottenburg 3 (DE)**

(72) Erfinder : **BUCK, Alfred**
**Nagolder Strasse 32**
**W-7407 Rottenburg 3 (DE)**

(74) Vertreter : **Rüger, Rudolf, Dr.-Ing. et al**
**Webergasse 3 Postfach 348**
**W-7300 Esslingen/Neckar (DE)**

## Beschreibung

Die Erfindung betrifft ein Rußfilter mit den Merkmalen des Oberbegriffes des Anspruches 1.

In der Zeitschrift "Der Nachverkehr", Heft 4, 1986, ist unter der Überschrift "Wickelrußfilter für Stadtomnibusse in der Erprobung im Verkehrsbetrieb" ein gattungsgemäßes Rußfilter beschrieben. Das Rußfilter enthält in einem Gehäuse eine Anzahl von Rohren, die einenends verschlossen sind und mit ihrem anderen Ende gasdicht in eine Lochplatte eingeschweißt sind die indem Gehäuse des Rußfilters abgedichtet eingesetzt ist. Die Rohre sind an ihrem Umfang gelocht und dienen als Träger für Keramikgarn, das in Form von zylindrischen Kreuzwickelspulen auf die Rohre aufgewickelt ist. Das von dem Dieselmotor kommende Abgas muß wegen der Anordnung der Spulen aus Keramikfasern zwangsläufig durch sie hindurchströmen, wobei sich die im Abgasstrom enthaltenen Rußteilchen an den Keramikfasern der Spulen festsetzen.

Damit der Abgasstrom, in dem verhältnismäßig sehr hohe Druckspitzen auftreten, die Windungen in den Spulen nicht verlagert, müssen die Spulen relativ fest gewickelt werden. Hierdurch verringert sich jedoch die zum Einfangen der Rußteilchen wirksame Oberfläche der Keramikgarne, denn es können nur solche Bereiche der Garne an der Rußfilterung teilnehmen, wie mit dem Abgasstrom unmittelbar in Berührung kommen. Durch benachbarte Lagen abgedeckte Abschnitte der Garnoberfläche sind unwirksam.

Wenn bei dem bekannten Rußfilter in einer nahe der Außenfläche liegenden Schicht im Garn ein Fadenbruch auftritt, verliert die Spule ihren inneren Halt und wird vom Abgasstrom aufgelöst. Dabei wird das Spulengarn von dem Rohr gegebenenfalls abgetragen und in andere Bereiche des Rußfilters verfrachtet, wo es den Strömungsweg des Abgases verlegt. Die von dem Garnmaterial der aufgelösten Spule abgedeckten Bereiche intakter Spulen falen wegen des erhöhten Strömungswiderstandes in zunehmendem Maße für die Abgasreinigung aus, weshalb ein sehr großer Teil durch das von seinem Filtermaterial befreite Rohr des Rußfilters hindurchströmt, denn dort ist der Strömungswiderstand relativ am kleisten. Sobald dieser Fehler auftritt, ist das Rußfilter praktisch wirkungslos geworden.

Bei der bekannten Anordnung des Filtermaterials ist die Gefahr eines Fadenbruches gerade in den äußeren Lagen nicht unbeträchtlich. Diese Lagen werden nämlich von dem stark diskontinuierlich strömenden Abgas in Schwingungen versetzt und außerdem treten innerhalb der Spule große Spannungen auf, die durch die Temperaturänderung des Filtermaterials hervorgerufen werden. Wegen der verhältnismäßig strammen Wicklung, die notwendig ist, um der Spule ihren inneren Halt zu geben, können sich Längenänderungen infolge von Temperaturänderungen nicht ausgleichen, sondern das Garn wird zunehmend auf Zug beansprucht.

Eine weitere Schwierigkeit bei dem bekannten Rußfilter besteht darin, daß die Spulen durch das ständige Aufheizen und Abkühlen eine gewisse Neigung haben sich zu lockern und Kanäle durch das Filtermaterial entstehen zu lassen, durch die das Abgas, ohne mit Filtermaterial nennenswert in Berührung zu kommen, hindurchströmen kann.

Grundsätzlich ähnliches gilt auch für ein Partikelfilter für Abgase nach der EP 0 230 579 A1 mit einem Wickelkörper aus temperaturbeständigen Fasern, bei dem die wesentliche Filterwirkung durch eine Grundfaser aus sehr dünnen Elementarfäden übernommen wird, die aus Keramik, Glas usw. bestehen können, während Metall-,insbesondere Stahlfasern, als Hilfsfasern im und/oder um den Wickelkörper herum vorgesehen werden, die die Filterwirkung unterstützen und gleichzeitig die erforderliche Steifigkeit des Wickelkörpers erbringen. Die Grundfasern sind insbesondere Faserstränge, die jeweils mehrere Elementarfäden mit sehr kleinem Durchmesser im Bereiche von einigen μm enthalten, wobei die Elementarfäden zu einem Roving parallel zueinander angeordnet oder zu einem Garn verdrillt sein können. Die die Hilfsfasern bildenden Metalldrähte können während des Wickelvorgangs der Grundfasern mitgewickelt werden und dadurch den Filter in allen Schichten durchsetzen; sie können aber auch zu Netzwerken verarbeitet sein, die am Außenumfang nicht nur als Filtermaterial und zur Versteifung des Wickelkörpers, sondern auch zum Schutz und zur Verankerung der Oberflächengrundfasern dienen sollen, um bei spröden und sehr dünnen Grundfasern ein Reißen dieser empfindlichen Grundfasern, beispielsweise bei der Hantierung zu vermeiden. Die für den Gasdurchgang erforderliche Porosität wird durch entsprechende Bemessung der Abstände der beispielsweise in Kreuzlagen gewickelten Faserstränge erreicht. Die Möglichkeiten, die empfindlichen Grundfasern so fest in den Wickelkörper einzubinden, daß keine Faserbrüche auftreten, sind bei solchen Wickeltechniken begrenzt.

Bei einem aus der CH-A 447 718 bekannten Abgasfilter für Dieselmotoren, bei dem mit einem Oxidationskatalysator imprägniertes temperaturbeständiges Fasermaterial für das Filterelement verwendet wird, kann dieses Fasermaterial beispielsweise in dem von zwei aus Asbestfasern weitmaschig gewebten Säcken unterschiedlichen Durchmessers begrenzten Ringraum angeordnet sein, wobei dieses ganze Filterelement dann in einem entsprechenden Filtertopf untergebracht ist. Asbestfasergewebe haben auch in weitmaschiger Ausführung einen verhältnismäßig großen Durchströmwiderstand. Sie sind auch grundsätzlich deshalb unerwünscht, weil die Gefahr besteht, daß sich Faserteilchen lösen, die in den Abgasstrom in die Umgebung gelangen und dort zu Gesundheitsschäden führen.

Schließlich ist aus der US-A-4 175 107 noch eine katalytische Abgasreinigungsvorrichtung für Verbrennungsmaschinen bekannt, bei der wenigstens ein Katalysatorelement Verwendung findet, das einen aus Quarzfasern, Siliziumkarbidfasern od.dgl. hergestellten mineralischen Webstoff als Katalysatorträger aufweist, auf den Silizium-, Magnesium-,Circonium-,Titan- od.dgl. Schichten aufgebracht sind. Um dem Ganzen die notwendige Festigkeit zu geben, sind die aus dem mit Katalysator beschichteten oder imprägnierten Webstoffen bestehenden Schichten unter Ausbildung eines zylinder- oder patronenförmigen Gebildes zwischen innen- und außenliegenden Schichten aus Stahlgewebe angeordnet, das aus einem temperaturbeständigen Draht hergestellt ist. Der Durchströmwiderstand eines solchen Webstoffwikels ist verhältnismäßig hoch; auch ist es schwierig, gleichmäßige Durchströmverhältnisse in einem solchen mehrlagigen Wickelkörper aus Webstoff zu erzielen. Davon hängt aber u.a. der Wirkungsgrad des ganzen Filters ab.

Ausgehen hiervon ist es Aufgabe der Erfindung, ein Rußfilter zu schaffen, das einen verbesserten Wirkungsgrad und eine höhere Betriebssicherheit aufweist.

Diese Aufgabe wird erfindungsgemäß durch das Rußfilter mit den Merkmalen des Anspruches 1 gelöst. Durch die Verwendung von rundgestrickter Maschenware für das Filtermaterial werden die Fasern und Garnabschnitte,ohne zusätzliche Einwirkung von außen, festgehalten. Slebst wenn das Garn einer Masche brechen sollte, verliert die Maschenware nicht ihren inneren Halt und die entstehenden freien Garnenden im Bereich dert zerstörten Masche werden von den benachbarten intakten Maschen festgehalten. Es kann schlimmstenfalls eine Laufmasche entstehen, die jedoch die Festigkeit des Gestricks oder gewirks nicht zu beeinträchtigen vermag. Insbesondere vermeidet die Einbindung des Garnes in den Maschen ein vollständiges Auflösen der Struktur, wie dies bei Spulen der Fall ist, wenn in einer äußeren Lage der Faden bricht. Es ist deswegen bei dem neuen Rußfilter auch nicht notwendign, das Garn des Filtermaterials unter einer Vorspannung zu halten, damit der in die entsprechende Form gebrachte Körper aus Filtermaterial den notwendigen inneren Halt hat. Zufolge der fehlenden inneren Spannung und des auch kleineren Überdeckungsfaktors des Garnes durch benachbarte Garnabschnitte entsteht eine größere wirksame Filterfläche. Schließlich ist das Gewirk oder Gestrick in der Lage, aufgrund seiner Eigenelastizität das Entstehen von Spannungen infolge von Temperaturänderungen zu verhindern.

Wegen der Ausbildung als Maschenware entsteht die Reinigungswirkung sowohl bei einer Durchströmung des Filtermaterials quer zu den Lagen als auch dann, wenn das Abgas zwischen den Lagen etwa parallel zu diesen hindurchströmt. Wegen der lockern Packung, die durch das Einbinden des Keramikgarnes in den Maschen möglich ist, wird diese Möglichkeit der Durchströmung gegeben.

Um eine gute Reinigungswirkung zu erzielen, können ohne weiteres mehrere Lagen unmittelbar aufeinanderliegend angeordnet sein. Es ist aber auch möglich, zwischen den Lagen Keramikfasern unterzubringen, die als woven- oder non-woven-Fasermaterial vorliegen, beispielsweise als Wirrfaservlies, als Lunte oder als Rovinggewebe. Die zu beiden Seiten befinlichen Maschenware hält die zwischen den Lagen befindlichen, im wesentlichen losen Fasern sicher fest, wobei gleichzeitig wegen der lockeren Packung eine gute Durchströmbarkeit erhalten bleibt. Eine solche Anordnung ist insbesondere dann von Vorteil, wenn die Kosten für das Filter gesenkt werden sollen, weil ein Wirrfaservlies billiger herzustellen ist als Maschenware gleichen Volumens.

Es ergeben sich auch einfache Befestigungsverhältnisse für die Maschenware in Form von Schlauchware, weil diese ohne weitere Bearbeitungsschritte ein in Umfangsrichtung in sich geschlossenes gebilde ist, das die Befestigung von Rändern entbehrlich macht. Außerdem entstehen keine Verdickungen dort, wo Ränder aneinander anstoßen oder überlappen, sondern es genügt, wenn die Maschenware an den stirnseitigen Enden auf einem rohrförmigen Träger befestigt wird. Die Anforderungen, die dabei an die Qualität der Befestigung gestellt werden müssen, sind gering. Da jede offene Warenkante die Gefahr von Laufmaschenbildungen mit sich bringt, wenn keine besondern, die Herstellung verteuernden Vorkehrungen getroffen werden, lassen sich stabile mehrlagige Filter einfach dadurch herstellen, daß der Warenschlauch ein- oder mehrfach auf sich selbst zurück umgeschlagen wird. Die Dehnbarkeit in Umfangsrichtung der Maschenware gestattet eine solche Vorgehensweise ohne weiteres, wodurch es möglich ist, ein viellagiges Gebilde zu erhalten, bei dem nur zwei offene Warenkanten auftreten. Die Maschenware liegt hierbei im Längsschnitt gesehen zickzackförmig Lage auf Lage.

Wenn es darum geht, zwei Warenschläuche ineinanderzuziehen, wobei die Warenschläuche mit Abstand voneinander verlaufen sollen, läßt sich dies einfach dadurch erreichen, daß einer der Warenschläuche auf sich selbst aufgerollt wird, und zwar entweder von einem Ende oder von beiden Enden her, wodurch auf einfache Weise ein freies Volumen erzeugt werden kann, das mit losem Fasermaterial gefüllt werden kann. Außerdem ist das Aufrollen des Warenschlauches auf sich selbst eine einfache Möglichkeit, um die offene Warenkante verhältnismäßig wirksam gegen Laufmaschenbildung zu sichern.

Ein zweilagiges endloses Gebilde kann auch dadurch einfach erzielt werden, indem die stirnseitigen Enden eines Warenschlauches entsprechender Länge durch Ketteln od.dgl. miteinander verbunden werden. Hierdurch lassen sich zweilagige ringförmige Gebilde erreichen, deren Durchmesser wegen der Eigenelastizität von gestrickter oder gewirkter Ware an unterschiedliche Trägerdurchmesser anpaßbar ist.

Um den Druckverhältnissen innerhalb des Rußfilters an den unterschiedlichen Stellen Rechnung zu tragen, besteht die Möglichkeit, die Maschenware mit unterschiedlicher Maschenweite herzustellen, damit Ware mit großer Maschenweite an den Stellen im Filter zu liegen kommt, wo der Staudruck niedrig ist, während Filtermaterial mit kleiner Maschenweite dort im Filter angeordnet wird, wo der Staudruck hoch ist. Das Filtermaterial hat auf diese Weise unterschiedlichen Strömungswiderstand entsprechend den Strömungsverhältnissen im Filter.

Die beim Filtern wirksame Oberfläche der Maschenware läßt sich vergrößern, wenn die Maschenware als Plüschware gewirkt oder gestrickt ist, und zwar sowohl in Form von Schlingenware als auch in Gestalt von Schneidplüsch. Dabei hat ersterer den Vorteil, daß keine zusätzlichen Arbeitsgänge zum Aufschneiden der zweiflächigen Ware notwendig sind und auch keine freien Garnenden entstehen, von denen ausgehend sich das Garn begrenzt auflösen könnte. Andererseits hat eine begrenzte Auflösung des Garnes an den freien Enden von Schneidplüsch eine weitere Vergrößerung der filternden Oberfläche zur Folge und die freien Enden können sich leichter in benachbarten Lagen verhaken, um den aus der Ware gebildeten Filterkörper weiter zu stabilisieren.

Da das in Form von Maschenware verarbeitete Garn nur eine verhältnismäßig sehr kurze Strecke freiliegt, ehe es sich mit einem benachbarten Garnabschnitt kreuzt, können zur Herstellung der Maschenware ungedrehte, falschgedrehte und gedrehte Garne verwendet werden. In jedem Falle werden die enthaltenen Fasern durch die Maschen festgehalten, was insbesondere bei ungedrehten Garnen wichtig ist, die aber andererseits eine sehr große filternde Oberfläche bereithalten.

Wie bereits gesagt, läßt sich als Schlauchware hergestelltes Filtermaterial ohne Schwierigkeiten auf rohrförmigen Trägern befestigen, die in ihrer Rohrwand gelocht sind. Dabei wird vorteilhafterweise eine Außen/Innenströmung verwendet, die dafür sorgt, daß das Abgas, das durch das Filtermaterial hindurchströmt, das Filtermaterial gegen das sie stützende Rohr anpreßt.

In der Zeichnung sind Ausführungsbespiele des Gegenstandes der Erfindung dargestellt. Es zeigen:

Fig. 1 ein schematisiertes Rußfilter gemäß der Erfindung in einem Längsschnitt,

Fig. 2 eines der Stützrohre des Rußfilters nach Fig. 1 in einem schematisierten Längsschnitt,

Fig. 3 eine Ausschnittsdarstellung der für das Rußfilter nach Fig. 1 verwendeten Maschenware, und

Fig. 4 bis 11 unterschiedliche Arten der Anbringung der Maschenware auf den Stützrohren.

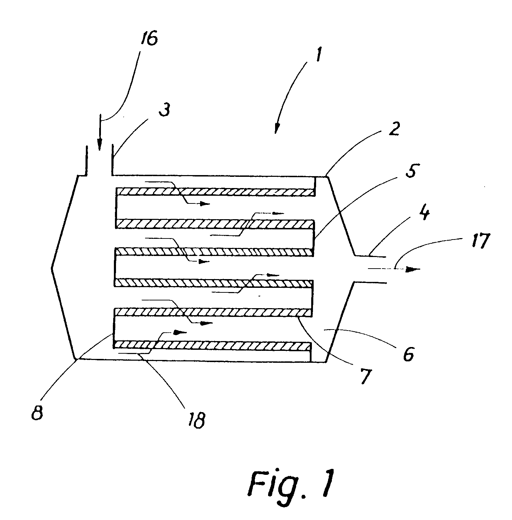

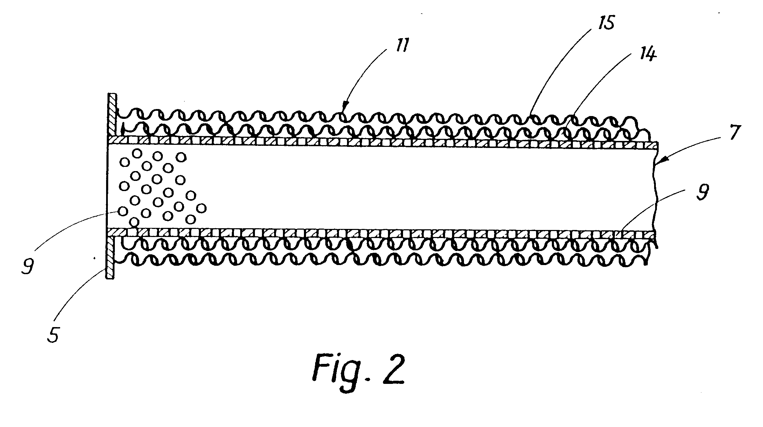

In Fig. 1 ist stark schematisiert ein Rußfilter 1 für einen verdichtenden Verbrennungsmotor, insbesondere einen Dieselmotor dargestellt, das in dessen Abgasstrom anzuordnen ist, um das Abgas von Rußpartikeln zu befreien. Das Rußfilter 1 weist ein behälterartiges allseits geschlossenes Gehäuse 2 auf, an dessen einer Seite ein Einlaßstutzen 3 und an dessen anderer Seite ein Auslaßstutzen 4 angeordnet ist. Im Inneren des Behälters 2 befindet sich in der Nähe des Auslaßstutzens 4 eine Lochplatte 5 mit einer Anzahl äquidistant verteilter Öffnungen oder Löcher 6. In jeder der Öffnungen 6 ist ein Rohr 7 eingesetzt, das sich von der Lochplatte 5 in Richtung auf den Einlaßstutzen 3 erstreckt und an seinem der Lochplatte 5 abliegenden Ende bei 8 verschlossen ist. Die Rohre 7 sind in der Lochplatte 5 durch Schweißen od.dgl. befestigt und abgedichtet. Die Wand der Rohre 7 ist, wie Fig. 2 zeigt, mit einer Vielzahl kleiner Durchgangsöffnungen 9 versehen, die auf der gesamten Wand des Rohres 7 äquidistant verteilt sind und einen kleinen räumlichen Abstand voneinander aufweisen.

Die Rohre 7 verlaufen im Inneren des Gehäuses 2 parallel zueinander und parallel zu der Längsachse des etwa zylindrischen behälterartigen Gehäuses 2. Sie dienen als Stützen oder Träger für Filtermaterial 11, das in einer oder mehreren Lagen die Rohre 7 umgibt, soweit sie mit den Öffnungen oder Löchern 9 versehen sind.

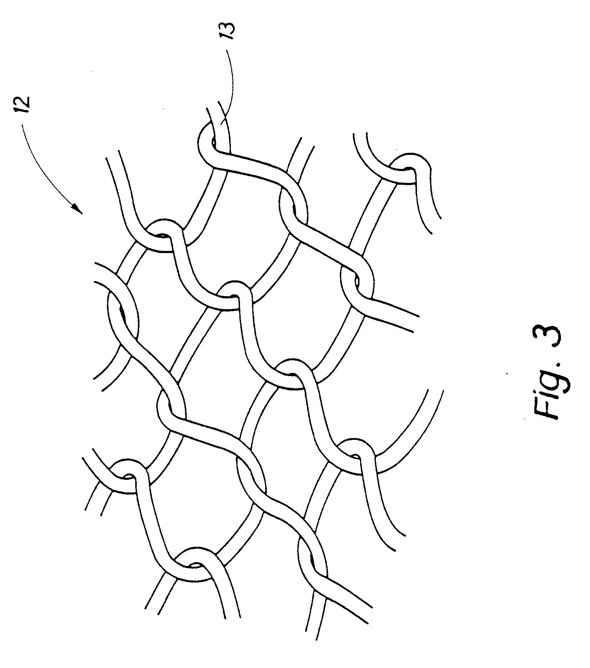

Das Filtermaterial 11 besteht aus gestrickter oder gewirkter Maschenware 12, die in Fig. 3 ausschnittsweise dargestellt ist. Die Maschenware 12 ist vorzugsweise ein oder mehrere rundgestrickte oder rundgewirkte Schläuche aus einem Keramikgarn 13, das einen Durchmesser von ca. 1 mm aufweist. Das Keramikgarn 13 ist bevorzugt ein Fasergarn, kann aber auch ein Multifilamentgarn sein. Je nach Verwendungszweck und Anforderungen an die Festigkeit handelt es sich um ungedrehtes oder gedrehtes Garn, wobei sowohl falsch- als auch tatsächlich-gedrehtes Garn in Frage kommt. Das Material, aus dem die Fäden oder Fasern des Garns 13 bestehen, ist ein Aluminiumborsilikat, bestehend aus 62 Gewichtsprozent Aluminiumoxid ($Al_2O_3$), 14 Gewichtsprozent Boroxid ($B_2O_3$) und 24 Gewichtsprozent Siliziumdioxid ($SiO_2$).

Die in Fig. 3 gezeigte Bindung ist eine Rechts-Links-Bindung mit verhältnismäßig geringer Querelastizität, d.h. bei Dehnung des Gestricks in Längsrichtung entsteht eine entsprechende Querkontraktion.

Die Herstellung des insoweit beschriebenen Rußfilters 1 geschieht in der Weise, daß auf einer entsprechenden Maschine aus dem Keramikgarn 13 ein endloser Warenschlauch gestrickt oder gewirkt wird, von dem entsprechend lange Abschnitte abgeschnitten werden. Die erhaltenen Abschnitte werden, wie Strümpfe, über die Rohre 7 gezogen, und zwar so viele, wie das fertige Filter 1 Lagen auf jedem der Rohre 7 aufweisen soll. Der Einfachheit halber sind in Fig. 2 lediglich zwei Lagen 14 und 15 dargestellt. Bei einem tatsächlich ausgeführten Rußfilter 1 ist die Zahl der Lagen jedoch weit höher, nämlich zehn bis fünfzehn. Sobald genügend Warenschläuche entsprechend der gewünschten Anzahl von Lagen 14, 15 über ein jeweiliges Rohr 7 gezogen sind, werden die aufgezogenen Warenschläuche in der Nähe der Lochplatte 5 durch eine nicht weiter gezeigte temperaturfeste Schelle auf der Außenumfangsfläche des Rohres 7 befestigt, während ihr oberes Ende, das an der verschlossenen Seite 8 liegt, mit einem Garn gleichem Materials abgebunden wird. Vor dem Abbinden werden die einzelnen Warenschläuche auf dem Rohr geringfügig in die Länge gezogen, so daß die auftretende Querkontraktion die einzelnen Schichten oder Lagen 14, 15 dicht gepackt aufeinanderliegen läßt, ohne eine allzu große Spannung hervorzurufen. Wenn sämtliche Rohre 7 entsprechend bestückt sind, wird die so vorbereitete Lochplatte 5 in dem Gehäuse 2 untergebracht und das Gehäuse 2 verschlossen. Das über dem Einlaßstutzen 3 einströmende Abgas (gemäß einem Pfeil 16) muß, um durch das Rußfilter 1 hindurchströmen zu können, durch das Filtermaterial 11, und zwar durch die Maschen der Maschenware 12 hindurch sowie die Löcher 9 in das Innere der Rohre 7 strömen, damit es entsprechend einem Pfeil 17 durch den Auslaßstutzen 4 abströmen kann. Die Durchströmung des Filtermaterials 11 ist durch Pfeile 18 schematisch angedeutet eine Außen-/Innenströmung.

Bei dem so hergestellten Filter liegt das Filtermaterial 11 in einzelnen Lagen 14, 15 oder mehr auf der Außenumfangsfläche der Rohre 7, wobei in jeder Lage 14, 15 wegen der schlauchförmigen Herstellung der Maschenware eine in Umfangsrichtung in sich geschlossene Schicht zustandekommt, die ohne besondere Maßnahmen zusammenhält, so daß keine Verdickungsstellen auftreten.

Selbst wenn innerhalb der Maschenware das Garn an einzelnen Maschen brechen sollte, behalten die auf das entsprechende Rohr 7 aufgezogenen Lagen 14, 15 aus der schlauchförmigen Maschenware ihren inneren Halt, da die Enden des gebrochenen Garnbereiches von benachbarten Maschen, mit denen sie verschlungen sind, sicher festgehalten werden. Solche Garnbrüche sind deswegen nicht auszuschließen, weil das aus Keramikmaterial bestehende Garn relativ spröde ist und von dem vorbeiströmenden Abgas in Schwingungen versetzt werden kann, die bei Dauereinwirkungen bekanntermaßen in allen Materialien Brüche hervorrufen können.

Die Verwendung einer gewirkten oder gestrickten Ware als Filtermaterial hat außerdem den Vorteil, daß die durchströmenden Abgase auch bei lockerem Aufbringen des Filtermaterials 11 keine "Kanäle" durch das Filtermaterial 11 freiblasen können, an denen der Strömungswiderstand dann deutlich absinkt, während andererseits die wirksame Filteroberfläche im Bereich solcher Kanäle sehr klein wird. Das durch die Maschen in kleinen Abständen festgelegte Garn ist unempfindlich gegen Verlagerung durch Gasströme, und zwar auch dann, wenn das Filtermaterial 11 ohne innere Spannung auf den Rohren 7 gehaltert ist. Eine zusätzliche Spannung, wie sie bei gewickeltem Filtermaterial 11 notwendig ist, würde die Gefahr des Brechens des Garnes begünstigen.

Bei einer derzeit bevorzugten Ausführungsform der Maschenware 12 beträgt die Maschenweite 5 mm und die Teilung 6. Um bei dem Filtermaterial 11 eine noch größere wirksame Oberfläche zu schaffen, kann die Maschenware 12 als Plüsch mit einzelnen Plüschhenkeln abgestrickt sein oder auch als zweiflächige Ware, die anschließend zur Bildung von Schneidplüsch aufgeschnitten wird.

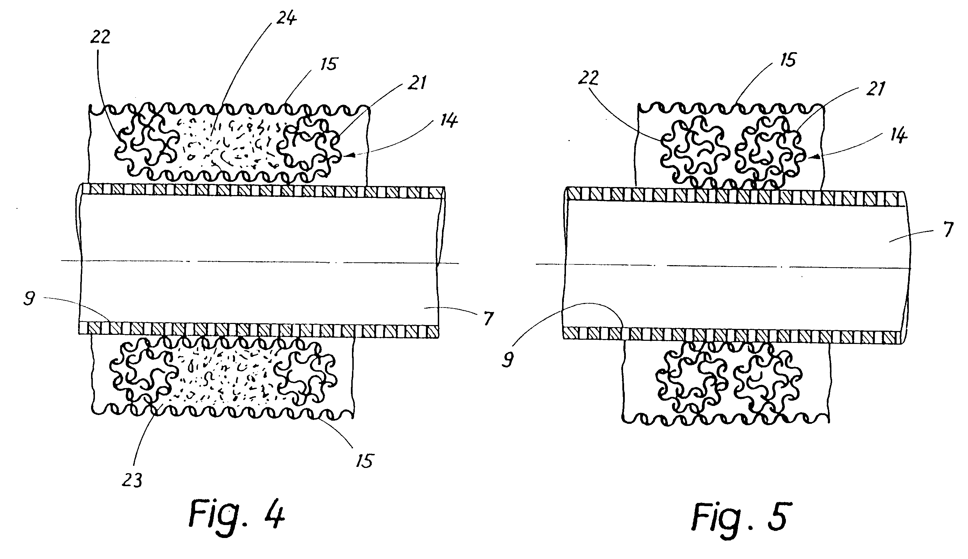

Während bei dem bisher erläuterten Ausführungsbeispiel die einzelnen Warenschläuche einfach koaxial ineinanderstecken, wobei zueinander parallele zylindrische Lagen oder Schichten entstehen, ist bei dem Ausführungsbeispiel nach den Fig. 4 und 5 der die innerste Lage bildende Warenschlauch 14 von seinen äußeren Stirnenden her auf sich selbst aufgerollt, so daß zwei in Umfangsrichtung geschlossene wulstartige Ringe 21 und 22 entstehen. Durch das Einrollen des Warenschlauches 14 wird dessen obere Warenkante ohne besondere Maßnahmen gegen Auflösen gesichert. Außerdem bilden die Wülste oder Rollen 21, 22 gleichzeitig Abstandshalter für den darüber gestreiften anderen Warenschlauch 15, so daß, wenn wie in Fig. 4 gezeigt, die beiden Rollen oder Wülste 21, 22 einen axialen Abstand, bezogen auf das Rohr 7 voneinander aufweisen, ein Hohlraum 23 entsteht, der locker mit woven- oder non-woven-Fasermaterial 24 zu füllen ist. Das Fasermaterial 24 wird unabhängig davon, in welcher Form es vorliegt, zwischen den beiden Warenschläuchen 14 und 15 gekammert und kann nicht durch den Abgasstrom herausgeblasen werden.

Wie Fig. 5 zeigt, kann der Warenschlauch 14 aber auch so weit aufgewickelt werden, daß die beiden Wülste 21 und 22 unmittelbar aneinander anliegen, so daß ein Warenschlauch bereits ein mehrlagiges Gebilde erzeugt, durch das der Abgasstrom hindurchgeht. Es versteht sich, daß in beiden Figuren nur Ausschnitte dargestellt sind, und daß diese dort gezeigten Anordnungen sich in vielfacher Weise nebeneinanderliegend über das gesamte Rohr 7 erstrecken, wobei nur der äußere Warenschlauch 15 sich über die gesamte Länge erstreckt, um die Anordnung sicher beieinanderzuhalten.

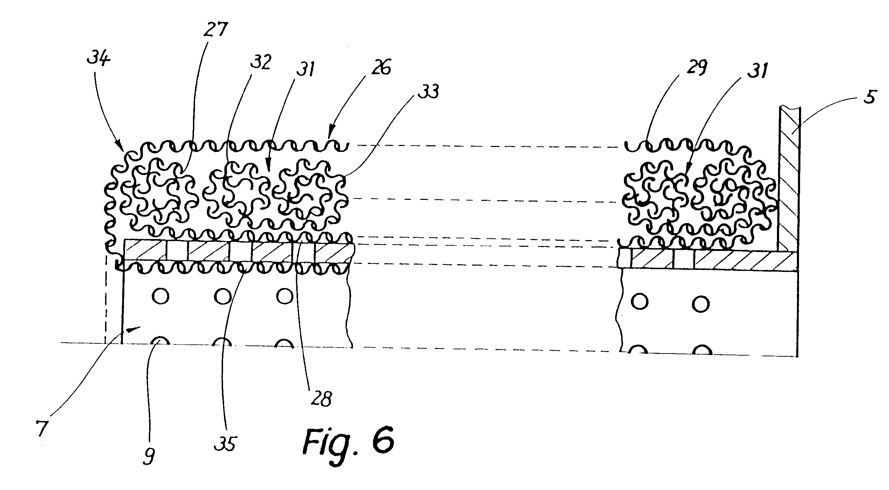

Bei der Anordnung nach Fig. 6 befindet sich auf dem Rohr 7 mit den Durchgangslöchern 9 ein erster Warenschlauch 26, der an seinem einen stirnseitigen Ende unter Ausbildung einer in Umfangsrichtung umlaufenden geschlossenen Rolle 27 auf sich selbst aufgerollt ist. Diese Rolle 27 befindet sich in der Nähe des von der Trägerplatte 5 abliegenden Endes des Rohres 7. Von dort aus erstreckt sich der Warenschlauch 26 zunächst unmittelbar auf der Außenumfangsfläche des Rohres 7 liegend als schlauchförmiges Gebilde in Richtung auf die veranschaulichte Trägerplatte 5, wobei er auf dem Rohr 7 eine Lage 28 bildet, die das Rohr 7 längs seinem Umfang allseitig umschließt. In der Nähe der Trägerplatte 5 ist der Warenschlauch 26 um 180° nach außen herum umgeschlagen, um von der Trägerplatte 5 in Richtung auf die Rolle 27 zurückzulaufen, wobei er eine weitere Lage 29 bildet. Auf der inneren Lage 28 liegen nebeneinander weitere Warenschläuche 31, die jeweils von ihren stirnseitigen Enden her unter Ausbildung von Rollen 32 und 33 auf sich selbst aufgerollt sind, und zwar so weit, bis die beiden Rollen 31 und 33 des Warenschlauches 31 dicht aneinander anliegen. Wie die Fig. 6 veranschaulicht, sind mehrere derartige Warenschläuche 31 zwischen der Rolle 27 des Warenschlauches 26 bis hin zu der Trägerplatte 5 nebeneinanderliegend angeordnet, und zwar dicht gepackt. Die in der Fig. 6 ersichtlichen zwickelartigen Zwischenräume zwischen den einzelnen Rollen 27, 32, 33 sind nur wegen der schematisierten Darstellung zu erkennen. Bei der praktischen Ausführung liegen die einzelnen Rollen 32, 33 so dicht gepackt nebeinander, daß sie ihre exakte Kreisform verlieren und bei der Querschnittsdarstellung, ähnlich Fig. 6, praktisch nicht mehr voneinander unterscheidbar wären.

Es ist auf diese Weise der gesamte Zwischenraum zwischen den beiden Lagen 28 und 29, die der Warenschlauch 26 bildet, von weiteren aufgerollen Warenschläuchen 31 gefüllt, die jeweils in Umfangsrichtung, bezogen auf das Rohr 7, geschlossene endlose Gebilde darstellen. Durch den Warenschlauch 26 werden sie allseitig umhüllt.

Der Warenschlauch 26 umhüllt schließlich auch bei 34 die von ihm gebildete Rolle 27. Sein noch freies Ende 35 ist endlich in das Innere des Rohres ein Stück weit hineingesteckt, was stark schematisiert dargestellt ist. Die noch verbliebene Öffnung in dem Rohr 7, das in der Nähe seines von der Trägerplatte 5 abliegenden Endes ein Stück weit durch den Warenschlauch 26 ausgekleidet ist, ist schließlich durch einen nicht veranschaulichten Stopfen verschlossen, durch den einerseits die notwendige stirnseitige Abdichtung des Rohres 7 ergibt und der andererseits das Ende 35 fixiert.

Da sowohl bei diesem Ausführungsbeispiel wie bei den vorher gezeigten die Abgase als Außen-/Innenströmung durch das Filtermaterial 11 und die Rohr 7 hindurchströmt, wird, abgesehen von zurücklaufenden Wellen im Abgasstrom, das Filtermaterial 11 überwiegend an die Außenwand des Rohres 7 angepreßt und von diesem unterstützt. Es erfordert deswegen auch ein in das Rohr 7 nach Fig. 6 eingesetzter Stopfen keine allzu großen Haltekräften, um nicht herausgeschleudert zu werden.

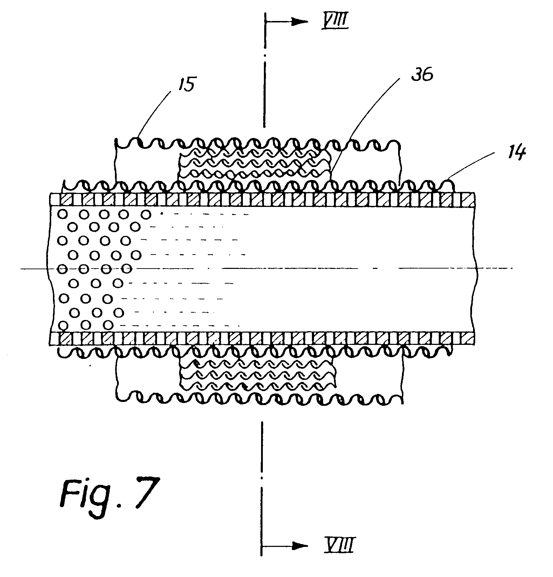

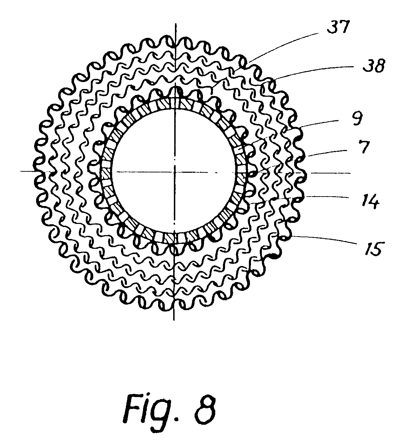

Bei dem in den Fig. 7 und 8 gezeigten Ausführungsbeispiel ist über das Rohr 7 ein innerer Warenschlauch 14 gezogen, der, wie im Zusammenhang mit Fig. 1 erläutert, befestigt ist. Auf den inneren Warenschlauch 14 ist in Umfangsrichtung, bezogen auf das Rohr 7, weitere Maschenware 36 aufgewickelt, die in Gestalt eines langen Streifens vorliegt, dessen Breite der Länge des Rohres 7 entspricht (bei Fig. 7 handelt es sich der Übersichtlichkeit halber um eine verkürzte schematisierte Darstellung). Dieser Streifen Maschenware 36 bildet auf dem inneren Warenschlauch 14, wie Fig. 8 erkennen läßt, eine Bandage oder einen Wickel, der bei 37 beginnt und dessen Ende bei 38 erkennbar ist. Im Querschnitt gesehen bildet die Maschenware 36 eine mehrgängige Spirale, um die notwendige Anzahl von Lagen zu erzeugen. Schließlich ist auf die bandagenartig aufgewickelte Maschenware 36 der äußere Warenschlauch 15 aufgezogen, der die außenliegende Kante 38 der Maschenware 36 sichert. Der von der Maschenware 36 gebildete Wickel ist bei dem Ausführungsbeispiel nach Fig. 7 durch zwei ineinandersteckende Warenschläuche, nämlich die Warenschläuche 14 und 15 eingehüllt und gegen Auflösen geschützt. Der äußere Warenschlauch 15 ist in der gleichen Weise befestigt und verschlossen, wie bei Fig. 1.

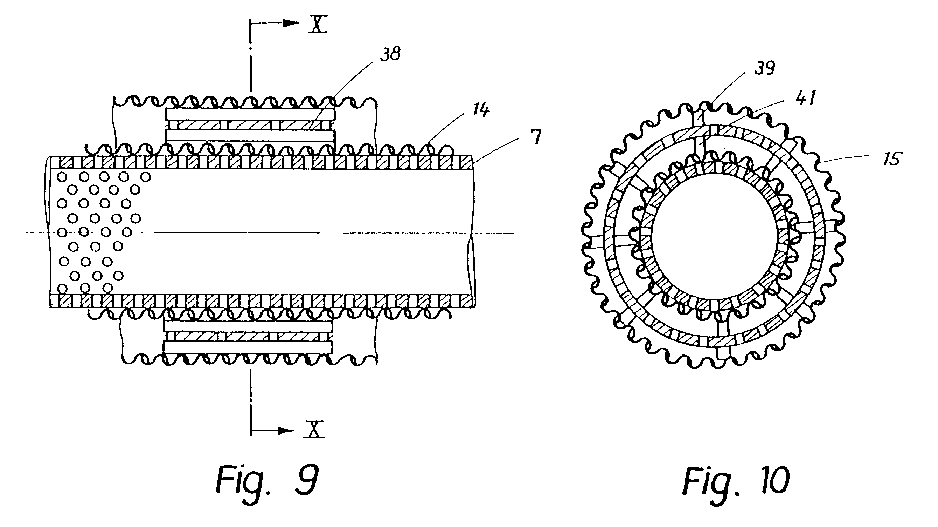

Wenn es darum geht, die ineinandersteckenden Warenschläuche 14 und 15 bzw. weitere Warenschläuche im Abstand voneinander zu halten, kann die in den Fig. 9 und 10 gezeigte Ausführungsform verwendet werden. Hierbei steckt auf dem inneren, unmittelbar auf dem Rohr 7 aufliegenden Warenschlauch 14 ein aus Draht gestrickter Warenschlauch 38, aus dem nach beiden Seiten, also radial nach außen und radial nach innen, Plüschhenkel 39 und 41 hervorstehen. Mit den radial nach innen stehenden Plüschhenkeln 41 stützt sich das Drahtgestrick 38 auf den inneren Warenschlauch 14 aus Keramikfaser ab, während die aus dem Drahtgestrick 38 radial nach außen vorstehenden Plüschhenkel oder -schlingen 39 Auflageflächen für den radial weiter außen liegenden Warenschlauch 15 aus Keramikmaterial bilden. Die beiden veranschaulichten Warenschläuche 14 und 15 werden durch durch den aus Draht gestrickten und deswegen in sich formsteifen Warenschlauch radial in einem entsprechenden vorbestimmten Abstand zueinander gehalten.

Während bei den Ausführungsbeispielen nach den Fig. 2 und 7 bis 10 die Durchströmung der filternden Maschenware im wesentlichen quer zu der Ware erfolgt, tritt bei den Ausführungsbeispielen nach den Fig. 4 bis 6 eine Durchströmung auf, die zwischen benachbarten Lagen hindurch verläuft. Im Bereich der Rollen, die in der Praxis dicht zusammengepackt sind, treten Bereiche des Wickels auf, in denen die Maschenware, die das Filtermaterial 11 bildet, etwa in radialen Ebenen verläuft, so daß die als radiale Außen-/Innenströmung auftretende Strömung zwangsläufig zwischen benachbarten Lagen oder Schichten von Maschenware hindurchströmen muß.

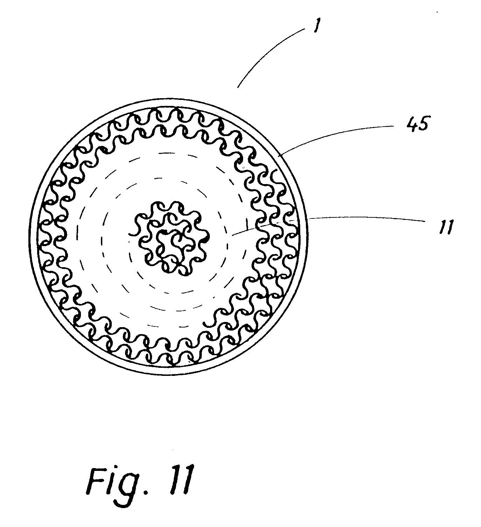

Bei dem Ausführungsbeispiel des Rußfilters 1 nach Fig. 11 ist ein zylindrisches rohrförmiges Gehäuse 45 vorgesehen, das an seinen beiden Stirnseiten verschlossen und mit Einlaß- bzw. Auslaßstutzen versehen ist. Das in dem Gehäuse 45 enthaltene Filtermaterial 11 besteht, wie vorher, aus der in Fig. 3 gezeigten Maschenware, die, wie die Fig. 11 erkennen läßt, spiralig zu einer Rolle aufgerollt ist, wobei der Außendurchmesser der entstandenen Rolle aus Maschenware der lichten Weite des Gehäuses 45 entspricht. Die Länge der Rolle ist so bemessen, daß sie ohne weiteres in dem Gehäuse 45 Platz findet.

Bei dieser Ausführungsform durchströmt das zu filternde Abgas die spiralig aufgewickelte Maschenware parallel zu den Lagen, die näherungsweise konzentrisch ineinanderliegen. Dabei ist auch der Innenraum im Inneren der entstandenen Rolle aus Maschenware vollständig gefüllt, so daß kein durchgehender Kanal auftritt, der einen geringeren Strömungswiderstand hat als in den umgebenden Bereichen.

## Patentansprüche

1. Im Abgasstrom einer Brennkraftmaschine, insbesondere einer luftverdichteten Brennkraftmaschine, angeordnetes Rußfilter (1), mit einem Zu- und Ableitungsstutzen (3, 4) für den Abgasstrom aufweisenden Gehäuse (2), in dem Filtermaterial aus (11) aus mineralischen Fäden oder Garnen angeordnet ist, dadurch gekennzeichnet, daß das Filtermaterial (11) zumindest teilweise oder vollständig von einer rundgestrickten Maschenware (12) gebildet ist.

2. Rußfilter nach Anspruch 1, dadurch gekennzeichnet, daß die Maschenware (12) unter Ausbildung von zumindest einer Lage oder Schicht (14, 15, 36) in dem Gehäuse (2) verlaufend angeordnet ist und daß die Abgasführung in dem Gehäuse (2) derart ist, daß die Lagen (14, 15) aus Filtermaterial (11) quer durchströmt ist.

3. Rußfilter nach Anspruch 1, dadurch gekennzeichnet, daß die Maschenware (12) in dem Gehäuse (1) unter Ausbildung mehrerer Lagen oder Schichten (21, 22, 27, 31, 32) verlaufend angeordnet ist und daß die Abgasführung in dem Gehäuse (2) derart ist, daß das Abgas in dem Filtermaterial (11) parallel zu den Lagen oder Schichten (21, 22, 27, 31, 32) strömt.

4. Rußfilter nach Anspruch 1, dadurch gekennzeichnet, daß die Maschenware (12) in dem Gahäuse (2) unter Ausbildung von zumindest zwei Lagen oder Schichten (14, 15) verlaufend angeordnet ist und daß die beiden Lagen oder Schichten (14, 15) unmittelbar aufeinanderiegen.

5. Rußfilter nach einem oder mehreren der vorhergehenden Ansprüche, dadurch gekennzeichnet, daß zumindest zwei Lagen (14, 15) mit Abstand voneinander verlaufen und der von ihnen begrenzte Zwischenraum (23) woven- oder non-woven-Fasermaterial (24) enthält.

6. Rußfilter nach einem oder mehreren der vorhergehenden Ansprüche, dadurch gekennzeichnet, daß die Lage oder Lagen (14, 15) die Gestalt von Zylinderflächen aufweisen.

7. Rußfilter nach Anspruch 6, dadurch gekennzeichnet, daß zur Ausbildung von zwei Lagen der Warenschlauch (14, 15, 31) auf sich selbst zurück umgestülpt ist.

8. Rußfilter nach Anspruch 6, dadurch gekennzeichnet, daß der Warenschlauch (14) mehrfach auf sich selbst zurück umgestülpt ist, wobei die Umlenkstellen in einem axialen Abstand voneinander liegen, derart, daß die Maschenware (12) zwischen den Umlenkstellen etwa rohrförmig oder zylindrisch verläuft.

9. Rußfilter nach Anspruch 6, dadurch gekennzeichnet, daß der Wareneschlauch (14, 31) von zumindest einem Ende her auf sich selbst aufgerollt ist.

10. Rußfilter nach Anspruch 6, dadurch gekennzeichnet, daß es einen Warenschlauch (14, 31) enthält, der von seinen beiden Enden her unter Ausbildung von zwei längs seinem Außenumfang umlaufenden Wülsten (21, 22, 32, 33) auf sich selbst aufgerollt ist.

11. Rußfilter nach Anspruch 10, dadurch gekennzeichnet, daß die beiden Wülse (21, 22, 32, 33) aneinander anliegen.

12. Rußfilter nach Anspruch 10, dadurch gekennzeichnet, daß die beiden Wülste (21, 22) einen axialen Abstand voneinander aufweisen.

13. Rußfilter nach Anspruch 9, dadurch gekennzeichnet, daß ein weiterer aus Maschenware (12) bestehender Warenschlauch (15) über den ersten Wülste (21, 22) bildenden Warenschlauch (14) gezogen ist.

14. Rußfilter nach Anspruch 6, dadurch gekennzeichnet, daß es wenigstens einen Warenschlauch (14) enthält, dessen beide Stirnseiten durch Ketteln od.dgl. miteinander verbunden sind, derart, daß er einen endlosen schlauchförmigen Ring bildet.

15. Rußfilter nach Anspruch 1, dadurch gekennzeichnet, daß die Maschenware (12) unterschiedliche Maschenweite aufweist.

16. Rußfilter nach Anspruch 1, dadurch gekennzeichnet, daß zumindest ein Teil der das Filtermaterial (11) bildenden Maschenware (12) Plüschware ist.

17. Rußfilter nach Anspruch 1, dadurch gekennzeichnet, daß die Maschenware (12) aus Keramikfasern besteht.

18. Rußfilter nach Anspruch 1, dadurch gekennzeichnet, daß die Garne (13) der Maschenware (12) ungedrehte, falschgedrehte oder gedrehte Garne sind.

19. Rußfilter nach Anspruch 1, dadurch gekennzeichnet, daß es einen Träger (5, 7) mit zumindest einem rohrförmigen Bereich (7) aufweist, der einenends abgeschlossen ist und in seiner Rohrwand eine Vielzahl von Löchern (9) enthält, durch die das Abgas beim Durchströmen des Rußfilters (1) hindurchströmt.

20. Rußfilter nach Anspruch 19, dadurch gekennzeichnet, daß der Träger (5, 7) in seinem rohrförmigen Bereich (7) auf der Außen- und/oder Innenseite mit einer Maschenware (12) belegt ist, die sich zumindest über den mit Löchern (9) versehenen Bereich erstreckt.

21. Rußfilter nach Anspruch 1, dadurch gekennzeichnet, daß die Maschenware (12) durch den Abgasstrom an den Träger (5, 7) angedrückt wird.

22. Rußfilter nach Anspruch 1, dadurch gekennzeichnet, daß zumindest zwei Lagen (14, 15) der Maschenware (12) eine etwa zylindrische Gestalt aufweisen, mit radialem Abstand ineinander verlaufen und daß in dem zwischen den beiden Lagen (14, 15) bestehenden Zwischenraum ein Abstandshalter (38) angeordnet ist, der die beiden Lagen (14, 15) im Abstand zueinander hält.

23. Rußfilter nach Anspruch 22, dadurch gekenzeichnet, daß der Astandshalter eine aus Draht gestrickte Schlauchware ist, aus der radial nach innen und nach außen Plüschhenkel (39, 41) hervorstehen.

24. Rußfilter nach Anspruch 1, dadurch gekennzeichnet, daß zummindest zwei Lagen (14, 15), die etwa zylindrische Gestalt aufweisen und etwa koaxial zueinander verlaufen, Maschenware (36) einschließen, die in Umfangsrichtung, bezogen auf die ineinandersteckenden Lagen (14, 15) gewickelt ausgeführt ist.

25. Rußfilter nach Anspruch 1, dadurch gekennzeichnet, daß die Maschenware (12) ohne Träger oder ähnliches in dem gehäuse (45) unmittelbar angeordnet ist.


## Claims

1. A soot filter (1) which is disposed in the exhaust gas flow of an internal combustion engine, more particularly an air compression internal combustion engine, having a casing (2) which has a supply spigot (3) and a discharge spigot (4) for the exhaust gas flow and in which filter material (11) of mineral threads or yarns is disposed, characterized in that the filter material (11) is at least partially or completely formed by a circular knitted fabric (12).

2. A soot filter according to claim 1, characterized in that the knitted fabric (12) is disposed extending in the casing (1) with the formation of at least one layer (14, 15, 36), and the exhaust gas passes through the casing (2) by flowing transversely through the layers (14, 15) of filter material (11).

3. A soot filter according to claim 1, characterized in that the knitted fabric (12) is disposed extending in the casing (1) with the formation of a number of layers (21, 22, 27, 31, 32), and the exhaust gas passes through the casing (2) by flowing in the filter material (11) parallel with the layers (21, 22, 27, 31, 32).

4. A soot filter according to claim 1, characterized in that the knitted fabric (12) is disposed extending in the casing (2) with the formation of at least two layers (14, 15), and the two layers (14, 15) are disposed lying directly one upon the other.

5. A soot filter according to one or more of the preceding claims, characterized in that at least two layers (14, 15) extend at a distance from one another, and the gap (23) bounded thereby contains woven or non-woven fibrous material (24).

6. A soot filter according to one or more of the preceding claims, characterized in that the or each layer (14, 15) takes the form of cylindrical surfaces.

7. A soot filter according to claim 6, characterized in that for the formation of two layers the tube of fabric (14, 15, 31) is turned back upon itself.

8. A soot filter according to claim 6, characterized in that the tube of fabric (14) is turned back upon itself a number of times, the places of deflection lying at an axial distance from one another such that the knitted fabric (12) extends in substantially tubular or cylindrical form between the deflecting places.

9. A soot filter according to claim 6, characterized in that the tube of fabric (14, 31) is rolled up upon itself from at least one end.

10. A soot filter according to claim 6, characterized in that it comprises a tube of material (14, 31) which is rolled up upon itself from its two ends with the formation of two beads (21, 22, 32, 33) extending along its external periphery.

11. A soot filter according to claim 10, characterized in that the two beads (21, 22, 32, 33) bear against one another.

12. A soot filter according to claim 10, characterized in that the two beads (21, 22) are at an axial distance

EP 0 334 910 B1

from one another.

13. A soot filter according to claim 9, characterized in that a further tube (15) consisting of knitted fabric (12) is drawn over the first fabric (14) forming beads (21, 22).

14. A soot filter according to claim 6, characterized in that it comprises at least one tube of fabric (14) whose two end faces are so interconnected via chain warps or the like that it forms an endless tubular ring.

15. A soot filter according to claim 1, characterized in that the knitted fabric (12) has a varying mesh width.

16. A soot filter according to claim 1, characterized in that at least a portion of the knitted fabric (12) forming the filter material (11) is plush.

17. A soot filter according to claim 1, characterized in that the knitted fabric (12) consists of ceramic fibres.

18. A soot filter according to claim 1, characterized in that the yarns (13) of the knitted fabric (12) are untwisted, false twisted or twisted yarns.

19. A soot filter according to claim 1, characterized in that it has a carrier (5, 7) which has at least one tubular zone (7) and which is closed at one end and which comprises in its tube wall a plurality of holes (19) through which the exhaust gas flows when flowing through the soot filter (1).

20. A soot filter according to claim 19, characterized in that in its tubular zone (7) the carrier (5, 7) is covered on the outside and/or inside with a knitted fabric (12) which extends over at least the zone formed with holes (9).

21. A soot filter according to claim 1, characterized in that the knitted fabric (12) is forced against the carrier (5, 7) by the exhaust gas flow.

22. A soot filter according to claim 1, characterized in that at least two layers (14, 15) of the knitted fabric (12) have a substantially cylindrical shape and extend inside one another at a radial distance, and disposed in the gap between the two layers (14, 15) is a spacing member (38) which retains the two layers (14, 15) at a distance from one another.

23. A soot filter according to claim 22, characterized in that the spacing member is a tubular material which is knitted from wire and from which plush loops (39, 31) project radially inwards and outwards.

24. A soot filter according to claim 1, characterized in that at least two layers (14, 15) which have a substantially cylindrical shape and which extend substantially coaxially with one another enclose knitted fabric (36) which is wound in the peripheral direction, referred to the layers (14, 15) inserted in one another.

25. A soot filter according to claim 1, characterized in that the knitted fabric (12) is directly disposed in the casing (45) without a support or the like.

## Revendications

1. Filtre à fumée (1) disposé dans le courant de gaz d'échappement d'un moteur à combustion interne, notamment d'un moteur du type à compression d'air, comportant une enceinte (2) munie de tubulures (3, 4) pour l'entrée et la sortie du courant de gaz d'échappement, dans laquelle est diposée de la matière filtrante (11) en fibres ou fils de matière minérale, caractérisé par le fait que la matière filtrante (11) est constituée, en totalité ou du moins en partie, par un tissu à mailles tricoté en tubulaire (12).

2. Filtre à fumée selon revendication 1, caractérisé par le fait que le tissu à mailles (12) est disposé dans l'enceinte (2) en y formant au moins une strate ou couche (14, 15, 36), et par le fait que le trajet des gaz dans l'enceinte (2) est tel que le courant de gaz traverse transversalement les couches (14, 15) de matière filtrante.

3. Filtre à fumée selon revendication 1, caractérisé par le fait que le tissu à mailles (12) est disposé dans l'enceinte (1) en y formant plusieurs strates ou couches (21, 22, 27, 31, 32), et par le fait que le trajet des gaz dans l'enceinte (2) est tel que les gaz d'échappement s'écoulent dans la matière filtrante (11) en suivant une direction parallèle aux couches ou strates (21, 22, 27, 31, 32).

4. Filtre à fumée selon revendication 1, caractérisé par le fait que le tissu à mailles (12) est disposé dans l'enceinte en y formant au moins deux couches ou strates (14, 15), et par le fait que les deux couches ou strates (14, 15) s'appliquent directement l'une sur l'autre.

5. Filtre à fumée selon une ou plusieurs des revendications précédentes, caractérisé par le fait qu'au moins deux couches (14, 15) s'étendent en étant séparées l'une de l'autre par un intervalle, l'espace intermédiaire (23) qu'elles délimitent contenant de l'étoffe fibreuse tissée ou non tissée (24).

6. Filtre à fumée selon une ou plusieurs des revendications précédentes, caractérisé par le fait que la ou les couches (14, 15) se présentent sous la forme de surfaces cylindriques.

7. Filtre à fumée selon revendication 6, caractérisé par le fait que le tissu tubulaire (14, 156, 3&) est retroussé sur lui-même pour former deux couches.

8. Filtre à fumée selon revendication 6, caractérisé par le fait que le tissu tubulaire (14) est retroussé plusieurs fois sur lui-même, les lignes de changement de direction étant mutuellement séparées par une distance

9

axiale de manière que le tissu à mailles (12) soit sensiblement tubulaire ou cylindrique entre les lignes de changement de direction.

9. Filtre à fumée selon revendication 6, caractérisé par le fait que le tissu tubulaire (14, 31) est roulé sur lui-même depuis au moins une extrémité.

10. Filtre à fumée selon revendication 6, caractérisé par le fait qu'il comporte un tissu tubulaire (14, 31) qui est roulé sur lui-même, depuis ses deux extrémités, en formant deux bourrelets (21, 22, 32, 33) entourant son pourtour extérieur.

11. Filtre à fumée selon revendication 10, caractérisé par le fait que les deux bourelets (21, 22, 32, 33) se touchent.

12. Filtre à fumée selon revendication 10, caractérisé par le fait que les deux bourrelets (21, 22) sont séparés par un intervalle axial.

13. Filtre à fumée selon revendication 9, caractérisé par le fait qu'une autre étoffe tubulaire (15) constituée par du tissu à mailles (12) est enfilée sur le tissu tubulaire (14) formant le premier bourrelet (21, 22).

14. Filtre à fumée selon revendication 6, caractérisé par le fait qu'il comporte au moins un tissu tubulaire (14) dont les deux extrémités sont reliées l'une à l'autre par remaillage ou analogue, de manière à former un anneau tubulaire ininterrompu.

15. Filtre à fumée selon revendication 1, caractérisé par le fait que le tissu à mailles (12) présente différentes largeurs de maille.

16. Filtre à fumée selon revendication 1, caractérisé par le fait qu'au moins une partie du tissu à mailles (12) constituant la matière filtrante (11) est de l'étoffe peluche.

17. Filtre à fumée selon revendication 1, caractérisé par le fait que le tissu à mailles (12) est fait de fibres céramiques.

18. Filtre à fumée selon revendication 1, caractérisé par le fait que les fils (13) du tissu à mailles (12) ont subi une torsion ou une fausse torsion, ou sont dépourvus de torsion.

19. Filtre à fumée selon revendication 1, caractérisé par le fait qu'il présente un support (5, 7), ayant au moins une région tubulaire (7) fermée à une extrémité et munie, dans sa paroi tubulaire, d'une pluralité de trous (9) par lesquels les gaz d'échappement s'écoulent lors de la traversée du filtre à fumée (1).

20. Filtre à fumée selon revendication 19, caractérisé par le fait que, dans sa région tubulaire (7), le support (5, 7) est garni extérieurement et/ou intérieurement d'un tissu à mailles (12) qui s'étend au moins sur la région munie de trous (9).

21. Filtre à fumée selon revendication 1, caractérisé par le fait que le tissu à mailles (12) est appliqué contre le support (5, 7) par le courant de gaz d'échappement.

22. Filtre à fumée selon revendication 1, caractérisé par le fait qu'au moins deux couches (14, 15) du tissu à mailles (12) présentent une forme sensiblement cylindrique, s'étendent l'une dans l'autre en étant séparées par un intervalle radial, et par le fait qu'un organe d'écartement (38) qui maintient les deux couches (14, 15) à distance l'une de l'autre est agencé dans l'espace intermédiaire compris entre les deux couches (14, 15).

23. Filtre à fumée selon revendication 22, caractérisé par le fait que l'organe d'écartement est un tissu tubulaire en fil tricoté d'où des bouclettes de peluche (39, 41) débordent radialement vers l'intérieur et l'extérieur.

24. Filtre à fumée selon revendication 1, caractérisé par le fait qu'au moins deux couches (14, 15) de forme sensiblement cylindrique, s'étendant sensiblement coaxialement l'une à l'autre, enferment du tissu à mailles (36) qui est enroulé en direction circonférentielle par rapport aux couches emboîtées (14, 15).

25. Filtre à fumée selon revendication 1, caractérisé par le fait que le tissu à mailles (12) est disposé directement dans l'enceinte (45), sans support ni moyen analogue.

Fig. 1

EP 0 334 910 B1

Fig. 2

Fig. 3

Fig. 4

Fig. 5

EP 0 334 910 B1

Fig. 6

Fig. 7

Fig. 8

Fig. 9

Fig. 10

EP 0 334 910 B1

*Fig. 11*

EP 0 334 910 B1